# EUROPEAN PATENT SPECIFICATION

(11) **EP 2 377 657 B1**
(45) Date of publication and mention of the grant of the patent: **02.08.2017**
(21) Application number: 09834167.0
(22) Date of filing: 23.12.2009
(51) Int. Cl.: B27K 3/08, B27K 5/00, B27K 5/04, C09K 21/00

(54) **METHOD FOR OBTAINING A PART MADE FROM A FIRE-RESISTANT MATERIAL**
VERFAHREN ZUM ERHALTEN EINES AUS EINEM FEUERFESTEN MATERIAL HERGESTELLTEN TEILS
PROCÉDÉ D'OBTENTION D'UNE PIÈCE DE MATÉRIAU IGNIFUGE

(30) Priority: 23.12.2008 ES 200803681
(43) Date of publication of application: 19.10.2011
(73) Proprietor: Oatek, S.L., 20820 Deba Guipuzcoa (ES)
(72) Inventor: URAIN, Irusta, E-01005 Vitoria (Álava) (ES); NICOLÁS, Guillermo, E-01005 Vitoria (Álava) (ES)
(74) Representative: Pons Ariño, Angel
(86) International application number: PCT/ES2009/070626
(87) International publication number: WO 2010/072880

(56) References cited:
- EP-A1- 1 452 286
- WO-A1-98/24604
- ES-A1- 2 125 758
- ES-A1- 2 223 281
- ES-A1- 2 246 157
- SU-A1- 1 645 154
- US-A- 3 968 276
- US-A1- 2007 193 220

## Description

### TECHNICAL FIELD OF THE INVENTION

The present invention relates to a procedure for obtaining a fireproof material piece that can be wood, metal, plaster, cardboard, plasterboard, wood pulp, polymers, ceramics or mixtures. The present invention falls within the building materials sector, especially in that of flooring pallets and the automotive parts manufacturing sector.

### BACKGROUND OF THE INVENTION

The use of fireproof shields to protect the wood is very old, although major advances have occurred in the mid-twentieth century. One of the materials that has been most protected is wood, from the standpoint of materials behaviour, it is a highly combustible material. Due to its combustibility, wood used in non-structural applications such as wooden floors, wall or ceiling coverings, furniture, etc. may influence the development of fire; we are able to improve its performance by using the appropriate products, treatment methods or construction details.

The specifications that must be met refer to its situation (e.g. close to escape routes) and / or its function (e.g. structural functions such as slabs, roofs, partition walls, etc.).The demands of the fire performance of a construction element are defined by how long it is able to maintain determined conditions in the standard test according to UNE-EN 13501-2 regulation which replaces the Spanish UNE 23093 regulation. The new regulation introduces the new fireproofing concepts and approaches.

The methods of fireproofing wood and other materials, aim to reduce their level of combustibility and flammability through the application of various chemicals or protecting them, where appropriate, with other non-combustible materials that act as a screen and prevent heat from reaching them. The 150 years experience of these methods has shown that deep soaking encourages rot, and can be easily remedied by adding fluoride. EP1452286 discloses a method of manufacturing non-combustible cryptomeria boards in a decompression-dedicated hermetic vessel comprising the steps of: a) applying a pressure of 1 MPa (10 bar) for 60 minutes, b) introducing an incombustibility agent into the vessel and again applying a pressure of 1 MPa (10 bar for 180 minutes, c) drying the wood in a drying vessel at 60-80 °C for 14 days.

### DESCRIPTION OF THE INVENTION

The present invention relates to a procedure for producing a fireproof material piece, characterized in that it comprises subjecting said pieces to a depression in an autoclave between 40 and 50 bars for a period of 8 to 20 minutes, then inserting a fireproof liquid in the autoclave and keeping it for a time between 25 and 40 minutes, removing the previous step pieces from the autoclave and putting them in a dryer at a temperature between 15 and 25 ° C. for 8 to 15 days. This fireproof piece is able to minimize current fire problems as it does not cause flames or asphyxiating gases.

In a first aspect, the present invention relates to a procedure for producing fireproof pieces of a material selected from the group comprising wood, metal, plaster, cardboard, plasterboard, wood pulp, polymers, ceramics or mixtures thereof, characterized in that it comprises:
a) subjecting said pieces to a depression in an autoclave between 40 and 50 bars for a period of 8 to 20 minutes
b) introducing a fireproof liquid into said autoclave and keeping the process over a length of 25 to 40 minutes
c) removing the previous step pieces from the autoclave and putting them
in a dryer at a temperature between 15 and 25 ° C. for 8 to 15 days.

In a preferred embodiment of the invention, the depression of the autoclave to remove air from the wood is 40 bars.

In another preferred embodiment, the depression is maintained between 10 and 15 minutes.

In another preferred embodiment, the fireproof liquid is maintained within the autoclave for 30 min.

In a preferred embodiment, the drying temperature in the dryer is 20 º C and in another preferred embodiment, the length of stay time is 10 days.

The procedure for fireproofing materials described in the present invention can be repeated several times on the same piece, since by the physical conditions in which it is done, it does not cause deterioration of materials. Also, it could be performed on pieces that due to use or over time have lost the fireproof properties conferred by the procedure.

Another aspect not forming a part of the present invention relates to a fireproof piece obtainable by a procedure as described above.

In a preferred embodiment, this fireproof piece is characterized in that it has a relative humidity between 6% and 12%. In a more preferred embodiment, said relative humidity is between 8% to 10%.

In a preferred embodiment, this fireproof piece is made of wood.

Another aspect not forming a part of the present invention relates to a fireproof pallet comprising at least two pieces of wood as described above characterized in that said pieces are arranged one above the light and the other one below.

This piece will be absorbed by a fireproof liquid and has a relative humidity between 6% and 12%. In a preferred embodiment, this piece has a relative humidity between 8% to 10%.

The fireproof pallet described is formed by pieces of fireproof wood obtainable by the method described above, so that at least two pieces are arranged one over the other to form the pallet. Both pieces will be connected with glue and the resulting product also varnished to obtain the final commercial product. Both the glue and the varnish can also be fireproof. One way to obtain this fireproof glue and varnish can be by adding fireproof liquid to the conventional products in the right proportion.

The most preferred embodiment is a pallet formed by a hardwood top piece, especially oak, jatoba, ipe, merbau, maple or walnut. The lower part of the pallet may be any other cheaper wood, particularly poplar. The fireproof pieces or the panels or pallets made of these pieces do not burn or emit smoke when facing heat or fire, being effective barriers for its transmission in homes, spaces and even vehicles. Therefore, they represent a solution for the wooden floors, large beams or automotive parts construction sectors against fire risks and related both human and financial costs.

As an illustration of the present invention but by no means limiting, the following examples are provided:

### Examples

### Example 1: Manufacture of fireproof wood pieces

162 pieces of oak wood 2000 x 200 mm and 162 pieces of poplar wood of the same dimensions were selected. The relative humidity of both types of wood was 10% measured by penetration with a GANN model device with two spikes. All the pieces were introduced in a non standard MEGATALDE autoclave, in which a depression of 40 bar was introduced for 15 minutes, to remove the air in the wood this way. Al end of that time IGNIMAD LA 33 fireproof liquid was introduced until filling the autoclave, and depression was kept for 20 minutes. When the process was finished the atmospheric pressure was restored and the excess liquid was removed. The pieces of wood were taken to the dryer, where they were kept at 20°C for 10 days. After this time, the relative humidity of the pieces was 10.5%.

### Example 2: Manufacture of the pallet elements

The pieces of oak were glued to a corresponding poplar wood piece with DK-10 (QUIDE, SA) glue. IGNIMAD LA 33 by 5% in volume was previously added to this glue to make it fireproof. The glued sheets were introduced in a dryer for 48 h. Later, they were sanded, mechanized and varnished. The varnish was applied in the following order; IR8501-T primer, IR-1032-T Background and ZQ-8018-T Finish, all of this added to the 5% with IGNIMAD LA 33.

The pieces are then ready to market.

### Example 3: Behavioural testing of the pallet before a radiant heat source according to UNE EN ISO 9239-1:2002 regulation.

Three longitudinal fireproof test pieces of the pallet, the oak facing side with a thickness of approx. 3.5 mm and a specific mass of 2.6 kg/m² and the poplar hidden side with a thickness of approx. 12 mm and specific mass of 5.4 kg/m², are tested for radiant heat onto a non- combustible fibre cement substrate of 6 mm. The fireproof product with which the wood has been treated according to the procedure of the invention is IGNIMAD LA 33, and the glue with which the two pieces of wood are attached is Devakol DK-10 with a density value of 600 g/m².

The two following parameters were measured in the test, which according to the table were:

| **Parameter** | **Test piece 1** | **Test piece 2** | **Test piece 3** | **MEAN** |
|---|---|---|---|---|
| CFE (kW / m ²⁾ | ≥ 10.90 | ≥ 10.90 | ≥ 10.90 | ≥10.90 |
| Total smoke production (% min.) | 14.75 | 11.59 | 8.88 | 11.74 |

| | | | | |
|---|---|---|---|---|
| CFE: Critical flow of extinction. | | | | |

### No combustion occurs in the wood.

### Example 4: Reaction test of the pallet to the direct action of a single flame source S/N UNE EN ISO 11925-2:2002

Six longitudinal fireproof test pieces of the pallet, the oak facing side with a thickness of approx. 3.5 mm and a specific mass of 2.6 kg/m² and the poplar hidden side with a thickness of approx. 12 mm and specific mass of 5.4 kg/m² are tested for small flame onto a non- combustible fibre cement substrate of 6 mm. The fireproof product with which the wood has been treated according to the procedure of the invention is IGNIMAD LA 33, and the glue with which the two pieces of wood are attached is Devakol DK-10 with a density value of 600 g/m^{2.}

The results of the test specific questions are shown in the table.

### Longitudinal direction of the test piece:

| **Parameter** | **Test piece 1** | **Test piece 2** | **Test piece 3** | **MEAN** |
|---|---|---|---|---|
| Thickness | 15.58 | 15.65 | 15.72 | 15.65 |
| Does material ignition occur? | NO | NO | NO | NO |
| ¿Does the flame exceed the distance of 150 mm? YES / NO) | NO | NO | NO | NO |
| Paper ignition? YES / NO) | NO | NO | NO | NO |

### Cross-sectional direction:

| **Parameter** | **Test piece 1** | **Test piece 2** | **Test piece 3** | **MEAN** |
|---|---|---|---|---|
| Thickness | 15.86 | 15.72 | 16.18 | 15.92 |
| Does material ignition occur? | NO | NO | NO | NO |
| ¿Does the flame exceed the distance of 150 mm? YES / NO) | NO | NO | NO | NO |
| Paper ignition? YES / NO) | NO | NO | NO | NO |

It is found that the pallet is perfectly fireproof The classification of the material according to examples 3 and 4 according to UNE EN 13501-1:2002 is of
- With regard to its behaviour to the fire: Bfl
- With regard to smoke production: s1.

## Claims

1. Procedure for obtaining a fireproof material piece **characterized in that** it comprises:
a) subjecting a piece of a material selected from group comprising wood, metal, plaster, cardboard, plasterboard, wood pulp, polymers, ceramics or mixtures thereof, to a depressurization in an autoclave between 40 and 50 bars for a period of 8 to 20 minutes,
b) introducing a fireproof liquid into said autoclave and keeping the process of step (a) over a length of 25 to 40 minutes,
c) removing the previous step pieces from the autoclave and putting them in a dryer at a temperature between 15 and 25°C for 8 to 15 days.

2. Procedure according to claim 1 wherein the material is selected from a plaster and cardboard blend, plasterboard, wood pulp panels, wood and polyurethane blends or cardboard.

3. Procedure according to claim 1 wherein the material is wood.

4. Procedure according to claim 1, **characterized in that** said depressurization in autoclave is 40 bars.

5. Procedure according to claim 1, **characterized in that** said length of stay time in autoclave of step a) is between 10 and 15 minutes.

6. Procedure according to claim 1, **characterized in that** said length of stay time of step b) is 30 minutes.

7. Procedure according to claim 1, **characterized in that** said temperature of step c) is 20 C.

8. Procedure according to claim 1, **characterized in that** said length of stay time in the dryer is 10 days.

## Patentansprüche

1. Verfahren zum Erhalten eines Teils aus einem feuerfesten Material, **dadurch gekennzeichnet, dass** es Folgendes umfasst:
a) ein Teil aus einem Material, das aus der Gruppe bestehend aus Holz, Metall, Gips, Pappkarton, Gipskarton, Zellstoff, Polymeren, Keramik oder Mischungen davon ausgewählt wird, wird für 8 bis 20 Minuten einer Druckverminderung in einem Autoklaven bei 40 bis 50 bar unterworfen,
b) eine feuerfeste Flüssigkeit wird in den besagten Autoklaven eingebracht und das Verfahren von Schritt (a) über eine Dauer von 25 bis 40 Minuten weitergeführt,
c) die Teile aus dem vorhergehendem Schritt werden aus dem Autoklaven entnommen und für 8 bis 15 Tage in einen Trockner bei einer Temperatur von 15 bis 25°C gestellt.

2. Verfahren nach Anspruch 1, wobei das Material aus einem Gemisch aus Gips und Pappkarton, Gipskarton, Zellstoffplatten, Gemischen aus Holz und Polyurethan oder Pappkarton ausgewählt wird.

3. Verfahren nach Anspruch 1, wobei das Material Holz ist.

4. Verfahren nach Anspruch 1, **dadurch gekennzeichnet, dass** die besagte Druckverminderung im Autoklaven bei 40 bar durchgeführt wird.

5. Verfahren nach Anspruch 1, **dadurch gekennzeichnet, dass** die besagte Dauer der Verweilzeit im Autoklaven von Schritt a) zwischen 10 und 15 Minuten beträgt.

6. Verfahren nach Anspruch 1, **dadurch gekennzeichnet, dass** die besagte Dauer der Verweilzeit von Schritt b) 30 Minuten beträgt.

7. Verfahren nach Anspruch 1, **dadurch gekennzeichnet, dass** die besagte Temperatur von Schritt c) 20°C beträgt.

8. Verfahren nach Anspruch 1, **dadurch gekennzeichnet, dass** die besagte Dauer der Verweilzeit im Trockner 10 Tage beträgt.

## Revendications

1. Procédé d'obtention d'une pièce de matériau ignifuge **caractérisé en ce qu'**il consiste à :
a) exposer une pièce d'un matériau sélectionné dans le groupe comprenant du bois, du métal, du plâtre, du carton, des plaques de plâtre, de la pâte de bois, des polymères, des matériaux céramiques ou des mélanges de ceux-ci, à une dépressurisation en autoclave entre 40 et 50 bars pendant une période de temps de 8 à 20 minutes,
b) introduire un liquide ignifuge dans ledit autoclave et poursuivre le procédé de l'étape (a) pendant une durée de 25 à 40 minutes,
c) retirer les pièces de l'étape précédente de l'autoclave et les placer dans un séchoir à une température comprise entre 15 et 25°C pendant 8 à 15 jours.

2. Procédé selon la revendication 1 où le matériau est sélectionné parmi les matériaux suivants, un plâtre et un mélange de cartons, des plaques de plâtre, des panneaux en pâte de bois, du bois et des mélanges de polyuréthane ou de carton.

3. Procédé selon la revendication 1 où le matériau est du bois.

4. Procédé selon la revendication 1, **caractérisé en ce que** ladite dépressurisation en autoclave est de 40 bars.

5. Procédé selon la revendication 1, **caractérisé en ce que** ladite durée de séjour en autoclave de l'étape a) est comprise entre 10 et 15 minutes.

6. Procédé selon la revendication 1, **caractérisé en ce que** ladite durée de séjour de l'étape b) est de 30 minutes.

7. Procédé selon la revendication 1, **caractérisé en ce que** ladite température de l'étape c) est de 20°C.

8. Procédé selon la revendication 1, **caractérisé en ce que** ladite durée de séjour dans le séchoir est de 10 jours.
